# EUROPÄISCHE PATENTSCHRIFT

(11) **EP 2 722 913 B1**
(45) Veröffentlichungstag und Bekanntmachung des Hinweises auf die Patenterteilung: **28.11.2018**
(21) Anmeldenummer: 12188879.6
(22) Anmeldetag: 17.10.2012
(51) Int. Cl.: H01M 4/08, H01M 4/42, H01M 4/62, H01M 10/04, H01M 4/36, H01M 2/02, H01M 4/02, H01M 4/04, H01M 4/38, H01M 10/30, H01M 10/32, H01M 10/34, H01M 4/12

(54) **Anodenmischung, Knopfzelle mit einer Metallpartikel umfassenden Anode und deren Herstellung**
Anode mixture, button cell with an anode comprising a metal particle and their preparation
Mélange pour anode, pile bouton avec une anode comprenant des particules métalliques et sa fabrication

(43) Veröffentlichungstag der Anmeldung: 23.04.2014
(73) Patentinhaber: VARTA Microbattery GmbH, 73479 Ellwangen (DE)
(72) Erfinder: Pytlik, Edward, 73479 Ellwangen (DE); Krebs, Martin, 73494 Rosenberg (DE)
(74) Vertreter: Patentanwaltskanzlei Cartagena

(56) Entgegenhaltungen:
- DE-A1-102009 023 126
- GB-A- 1 232 582
- US-A- 3 954 506
- US-A- 4 476 205
- US-A- 5 378 560
- US-A1- 2002 031 708
- US-A1- 2004 197 656
- US-A1- 2006 246 353

## Beschreibung

Die vorliegende Erfindung betrifft ein Verfahren zur Herstellung einer Knopfzelle mit einer Metallpartikel umfassenden Anode.

Knopfzellen weisen üblicherweise ein Gehäuse aus zwei Gehäusehalbteilen, einem Zellenbecher und einem Zellendeckel, auf. Diese können beispielsweise aus vernickeltem Tiefziehblech als Stanzziehteile hergestellt werden. Gewöhnlich ist der Zellenbecher positiv und der Zellendeckel negativ gepolt. In dem Gehäuse können die verschiedensten elektrochemischen Systeme enthalten sein, beispielsweise Zink/Braunstein, Zink/Luft, Silberoxid/Zink, Quecksilberoxid/Zink, primäre und sekundäre Lithium-Ionen-Systeme oder sekundäre Systeme wie Nickel/Cadmium oder Nickel/Metallhydrid.

Bei den Elektroden dieser elektrochemischen Systeme handelt es sich in der Regel um Kompositelektroden, enthaltend Partikel aus einem elektrochemisch aktiven Material, einen Binder sowie gegebenenfalls eine partikuläre die Leitfähigkeit verbessernde Komponente wie Ruß. Der Binder sorgt für die mechanische Stabilität der Elektrode, insbesondere soll er die Kontaktierung der Partikel aus dem elektrochemisch aktiven Material untereinander sowie zum Stromkollektor gewährleisten. Kontaktierungsprobleme können beispielsweise bedingt durch Gasungen als Folge einer Elektrolytzersetzung oder bedingt durch eine volumetrische Dynamik der Partikel bei Lade- und Entladevorgängen auftreten. Dekontaktierungen häufig die Folge, dass Elektroden nicht vollständig entladen werden können. Das bedeutet, der theoretische Energiegehalt einer Elektrode wird nicht vollständig ausgeschöpft.

Beispiele für Kompositelektroden auf Zinkbasis finden sich in der US 2004/0197656 A1 und in der US 3954506 A. In der US 2004/0197656 A1 werden Anoden beschrieben, die aus einer Mischung umfassend Zinkpartikel, einen Binder, einen Gasungsinhibitor sowie einen wässrigen Elektrolyten bestehen. Aus der US 3954506 A sind Zinkanoden bekannt, die aus einer wässrigen Mischung, umfassend Zinkstaub, einen Binder und Ruß hergestellt werden können.

Kompositelektroden für Lithiumbatterien sind aus der US 2002/0031708 A1 bekannt. Diese umfassen Kompositpartikel mit einer elektrisch leitfähigen Hülle, die durch Abscheidung aus der Gasphase (PVD, CVD) hergestellt wird.

Kompositelektroden für Ni/Cd-Batterien sind aus der US 4476205 A bekannt. Zu deren Herstellung wird zunächst eine wässrige Emulsion aus CdO-Partikeln und einem Binder erhitzt und abgekühlt. Hierbei werden beschichtete CdO-Partikel erhalten. Anschließend werden Cd-Partikel zugegeben und die Mischung derart auf ein Substrat gepresst, dass die CdO- und die Cd-Partikel miteinander in Kontakt treten.

Aus der US 5378560 A ist es bekannt, zur Herstellung von Knopfzellen ein feuchtes Anodenmaterial zu einem Pellet zu verpressen. Nach Trocknung kann das Pellet in ein Gehäuse eingesetzt werden.

Weiterhin ist die Verwendung von Pellets bei der Herstellung von Knopfzellen auch aus der US 2006/0246353 A1 bekannt.

Aus der DE 10 2009 023 126 A1 ist eine Knopfzelle bekannt, deren negative Elektrode aus Zinkpartikeln (dem elektrochemisch aktiven Material), einem partikuläres nichtmetallischen Leitmittel sowie einem Binder besteht. Zur Herstellung einer solchen Knopfzelle werden ein Zinkpulver, das nichtmetallische Leitmittel und der Binder in trockenem Zustand intensiv miteinander vermischt. Das dabei erhaltene Pulver wird in den Zellendeckel eines Knopfzellengehäuses eingerieselt und mit einem Elektrolyten versetzt. Der Zellendeckel wird mit einer geeigneten Dichtung sowie mit einem passenden, eine Kathode enthaltenden Zellenbecher kombiniert. Anschließend wird die Zelle verschlossen.

Die beschriebene Zelle zeigte in der Praxis gute bis sehr gute Kapazitätswerte, die vor allem auf eine gute Kontaktierung der Zinkpartikel untereinander zurückgeführt wurden. Zurückgeführt wurde dies auf das intensive trockene Mischen der Elektrodenpartikel.

Trockenmischungen haben allerdings einen signifikanten Nachteil. Bei der Verarbeitung von Trockenmischungen kommt es leicht zu Entmischungen und damit zu einer ungleichmäßigen Verteilung des Binders und des Leitmittels in der Elektrode, insbesondere wenn sich die Größe der Binder- und Leitmittelpartikel stark von der Größe der Zinkpartikel unterscheidet.

Der vorliegend beschriebenen Erfindung lag die Aufgabe zugrunde, Knopfzellen zu entwickeln, die sich einfach herstellen lassen und eine sehr hohe Kapazität aufweisen.

Diese Aufgabe wird gelöst durch das Verfahren zur Herstellung einer Knopfzelle mit einer Metallpartikel umfassenden Anode mit den Merkmalen des Anspruchs 1. Bevorzugte Ausführungsformen des erfindungsgemäßen Verfahrens sind in den abhängigen Ansprüchen 2 bis 9 angegeben.

Das erfindungsgemäße Verfahren weist die folgenden Schritte auf:
(1) Bereitstellung einer Anodenmischung, umfassend als Komponenten die Metallpartikel, mindestens einen Binder und mindestens ein Leitmittel,
(2) Bereitstellung eines Knopfzellengehäuses,
(3) Einbringen der Mischung in das Knopfzellengehäuse,
(4) Versetzen der Mischung mit einem Elektrolyten und
(5) Flüssigkeitsdichtes Schließen des Gehäuses.

Verfahren mit diesen Schritten sind aus dem Stand der Technik bekannt, beispielsweise aus der eingangs erwähnten DE 10 2009 023 126 A1. In dieser sind einige einsetzbare Binder, Leitmittel und Knopfzellengehäuseteile genannt. Als Elektrolyte für metallpartikelhaltige Anoden kommen insbesondere alkalische Elektrolyte in Frage. Das Schließen des Gehäuses erfolgt meist durch einen Bördelprozess.

Nicht bekannt aus dem Stand der Technik ist hingegen, die Komponenten der Anodenmischung vor dem Einbringen in das Knopfzellengehäuse in Gegenwart von Wasser zu kontaktieren. Genau durch diese Vorgehensweise zeichnet sich das erfindungsgemäße Verfahren aus.

Unter dem Begriff "Kontaktieren in Gegenwart von Wasser " ist zu verstehen, dass die Metallpartikel, der mindestens eine Binder und das mindestens eine Leitmittel (sowie gegebenenfalls fakultative Komponenten der herzustellenden Anodenmischung) in Gegenwart von Wasser zu einer Mischung verarbeitet werden, wobei alle drei Komponenten unmittelbar miteinander in Kontakt treten. Das Kontaktieren der Komponenten kann grundsätzlich auf mehrere verschiedene Arten durchgeführt werden.

Gemäß einer Variante A werden zunächst die Metallpartikel, der mindestens eine Binder und das mindestens eine Leitmittel zu einer Mischung verarbeitet und dann das Wasser der Mischung zugesetzt. Alternativ ist es auch möglich, das Wasser bereits während des Mischens den Komponenten zuzusetzen.

Gemäß einer Variante B kann zur Kontaktierung der mindestens eine Binder mit dem Wasser versetzt oder in dem Wasser gelöst und der entstehende Versatz oder die Lösung den Metallpartikeln und dem mindestens einen Leitmittel zugesetzt werden, bevorzugt nachdem diese miteinander vermengt wurden.

Gemäß einer Variante C können zur Kontaktierung der mindestens eine Binder und das mindestens eine Leitmittel mit dem Wasser versetzt und/oder in dem Wasser gelöst und der Versatz und/oder die Lösung auf die Oberfläche der Metallpartikel aufgebracht, insbesondere aufgesprüht, werden.

Die beschriebene Vorgehensweise bringt deutliche Vorteile mit sich. Das Wasser bewirkt zum einen ein gleichmäßiges Anheften des mindestens einen Leitmittels auf der Oberfläche der Metallpartikel. Die eingangs thematisierten Entmischungen können so weitgehend vermieden werden. Darüber hinaus hat sich herausgestellt, dass im Vergleich zum Stand der Technik geringere Mengen an Leitmittel erforderlich sind, um den gewünschten Effekt, eine definierte Leitfähigkeitserhöhung, zu erzielen.

Die bereitzustellende Anodenmischung umfasst erfindungsgemäß mindestens einen Gasungsinhibitor. Dieser hat die Aufgabe, eine mögliche Gasung, insbesondere eine Wasserstoffentwicklung, während des Betriebs einer Knopfzelle zu unterdrücken.

Bei einem Vorgehen gemäß Variante A kann der Gasungsinhibitor bereits vor der Zugabe des Wassers mit den übrigen drei Komponenten vermischt oder gleichzeitig mit dem Wasser zugegeben werden. Insbesondere ist es auch möglich, dass das Wasser mit dem mindestens einen Gasungsinhibitor versetzt oder der mindestens eine Gasungsinhibitor in dem Wasser gelöst wird.

Letzteres gilt auch im Fall eines Vorgehens gemäß Variante B oder Variante C. Auch bei dieser Ausführungsform kann es bevorzugt sein, das Wasser mit dem mindestens einen Gasungsinhibitor zu versetzen bzw. diesen im Wasser zu lösen (gemeinsam mit dem mindestens einen Binder). Er kann allerdings auch zusammen mit den Metallpartikeln (Variante C) bzw. den Metallpartikeln und dem mindestens einen Leitmittel (Variante B) vorgelegt werden.

Der mindestens eine Gasungsinhibitor scheidet sich während der Kontaktierung direkt auf der Oberfläche der Metallpartikel ab, so dass Metallpartikel resultieren, deren Oberfläche mit dem mindestens einen Leitmittel und dem mindestens einen Gasungsinhibitor beschichtet sind. Dabei sind das mindestens eine Leitmittel und der mindestens eine Gasungsinhibitor durch den mindestens einen Binder auf der Oberfläche fixiert.

Zur Kontaktierung der beschriebenen Komponenten kommt das Wasser bevorzugt in fein verteilter Form, insbesondere als Sprühnebel, zum Einsatz. So kann beispielsweise eine Mischung gemäß Variante A mit zerstäubtem Wasser besprüht werden. Auch Wasser-Binder-, Wasser-Binder-Gasungsinhibitor-, Wasser-Binder-Leitmittel und Wasser-Binder-Leitmittel-Gasungsinhibitor-Gemische lassen sich im Rahmen eines Sprühvorgangs auf die Oberfläche der Metallpartikel aufbringen.

Das Kontaktieren der Komponenten erfolgt bevorzugt mittels eines mechanischen Mischers, insbesondere eines Wirbelschichtmischers, oder einer Mühle, insbesondere eines Vertikal- oder Horizontalgranulators. Derartige Vorrichtungen verfügen in der Regel über Dosiersysteme, die beispielsweise eine sprühnebelförmige Zugabe des Wassers oder der erwähnten wasserhaltigen Mischungen ermöglichen. So können beispielsweise die Metallpartikel in einem Wirbelschichtmischer als Wirbelschicht vorgelegt und in dem Mischer mit einem Sprühnebel aus einem Wasser-Binder-Leitmittel-Gasungsinhibitor-Gemisch behandelt werden.

Das während oder zum Zwecke des Kontaktierens zugesetzte Wasser wird nach dem Kontaktieren (und vorzugsweise vor dem Einbringen der Anodenmischung in das Knopfzellengehäuse) mindestens teilweise, vorzugsweise vollständig, wieder entfernt, üblicherweise im Rahmen eines Trocknungsvorgangs. Das Trocknen kann beispielsweise durch leichtes Erwärmen und/oder Anlegen eines Vakuums erfolgen. Entsprechende Heizvorrichtungen oder Vorrichtungen zum Anlegen eines Vakuums können Bestandteil der erwähnten Mischer oder Mühlen sein.

Beim Kontaktieren führt das Wasser in Kombination mit dem Binder häufig zu einer Bildung von Agglomeraten, die sich ab einer bestimmten Größe schlecht verarbeiten lassen. Deshalb schließt sich an den Prozess des Kontaktierens in Gegenwart von Wasser ein Zerkleinerungsschritt, insbesondere ein Mahlvorgang, an. Erfolgt das Kontaktieren und/oder das anschließende Trocknen in einer Mühle, so können in dieser entstandene Agglomerate unmittelbar wieder aufgebrochen werden.

Das aus dem Trockenschritt und/oder dem Zerkleinerungsschritt erhaltene Kompositmaterial kann gemäß Schritt (3) direkt in das Knopfzellengehäuse eingebracht werden.

Bei den Metallpartikeln, die in dem erfindungsgemäßen Verfahren eingesetzt werden, handelt es sich bevorzugt um Partikel aus Zink, Eisen, Cadmium, Kupfer, Aluminium oder Legierungen der genannten Metalle. Daneben können auch Mischungen dieser Metalle oder Metalllegierungen eingesetzt werden. Insbesondere handelt es sich bei den Metallpartikeln um Zinkpartikel, die in Form eines Zinkpulvers eingesetzt werden.

Entsprechend handelt es sich bei den nach dem erfindungsgemäßen Verfahren hergestellten Knopfzellen insbesondere um Silber/Zink-, Zink/ Luft-, Nickel/Zink-, oder Zink/Braunstein-Batterien oder aber um Nickel/Cadmium-Batterien.

Weiterhin kann es sich bei den Metallpartikeln auch um Partikel aus einer Wasserstoffspeicherlegierung handeln. Entsprechend kann es sich bei den nach dem erfindungsgemäßen Verfahren hergestellten Knopfzellen auch um Nickel/Metallhydrid-Batterien handeln.

Vorzugsweise werden die Metallpartikel mit einer mittleren Partikelgröße < 500 µm, bevorzugt < 350 µm, insbesondere < 200 µm, eingesetzt.

Das mindestens eine Leitmittel ist bevorzugt ausgewählt aus der Gruppe mit Graphit, Aktivkohle, Ruß, Kohlenstoff-Nanoröhrchen und Mischungen davon. Bevorzugt handelt es sich um Graphit.

Die bevorzugte mittlere Partikelgröße des mindestens einen Leitmittels beträgt < 100 µm, bevorzugt < 50 µm, insbesondere < 20 µm.

Bei dem mindestens einen Binder handelt es sich bevorzugt um einen in Wasser prozessierbaren Binder, insbesondere ausgewählt aus der Gruppe mit Polyacrylat, Carboxymethylcellulose, insbesondere Natrium- oder Kalium-Carboxymethylcellulose, und Mischungen davon.

In einer besonders bevorzugten Ausführungsform handelt es sich bei dem mindestens einen Binder um ein mit einem Polyalkenyl-Polyether vernetztes Polymer auf Acrylatbasis. Die Verwendung solcher Polymere als Binder für die Elektroden elektrochemischer Zellen ist bekannt, sie werden beispielsweise unter der Handelsbezeichnung Carbopol® (eine eingetragene Marke der Lubrizol Advanced Materials, Inc., Cleveland Ohio, USA) vertrieben.

Nach Kenntnis der Anmelderin mussten solche Polymere auf Acrylatbasis als Elektrodenbinder bislang stets in Kombination mit Carboxymethylcellulose oder mit einem Carboxymethylcellulose-Derivat eingesetzt werden, um hydrophobe Eigenschaften des Polymers auf Acrylatbasis zu kompensieren. Die erfindungsgemäße Vorgehensweise erlaubt es hingegen, auf den Zusatz von Carboxymethylcellulose oder eines Carboxymethylcellulose-Derivats zu verzichten.

Bei dem mindestens einen Gasungsinhibitor, der in der Anodenmischung als Komponente enthalten ist, handelt es sich in der Regel um eine oberflächenaktive Substanz, insbesondere ausgewählt aus der Gruppe mit Polyethylenglykol, Polyethylenglykolether und Mischungen davon. Als Polyethylenglykolether eignen sich insbesondere C8-Phenol-Polyethylenglycolether und Dodecyl-Polyethylenglycolether, die beispielsweise unter den Handelsbezeichnungen Triton-X und Brij vertrieben werden.

In einer besonders bevorzugten Ausführungsform des erfindungsgemäßen Verfahrens enthält die Anodenmischung
- zwischen 0,05 und 5 Gew.-%, bevorzugt 0,1 und 1 Gew.-%, insbesondere 0,1 und 0,5 Gew.-%, des mindestens einen Leitmittels und/oder
- zwischen 0,05 und 5 Gew.-%, bevorzugt 0,1 und 2,5 Gew.-%, insbesondere 0,1 und 1 Gew.-% des mindestens einen Binders und/oder
- zwischen 0,05 und 1 Gew.-%, bevorzugt 0,05 und 0,5 Gew.-%, insbesondere 0,05 und 0,2 Gew.-%, des mindestens einen Gasungsinhibitors. und
- zwischen 85 Gew.-% und 99,95 Gew.-% der Metallpartikel.

Die genannten Prozentwerte beziehen sich jeweils auf das Gesamtgewicht der Anodenmischung in trockenem Zustand, also bevor ihr Wasser und/oder Elektrolyt zugesetzt wurde und ergänzen sich bevorzugt zu 100 Gew.-%.

Bei einer gemäß dem oben beschriebenen Verfahren hergestellte Knopfzelle kann es sich sowohl um sekundäre als auch um eine primäre Knopfzelle handeln, insbesondere vom Typ um Silber/Zink-, Zink/Luft-, Nickel/Zink-, Zink/Braunstein, Nickel/Cadmium oder Nickel/Metallhydrid.

Die gemäß dem beschriebenen Verfahren hergestellte Knopfzelle zeichnet sich durch eine verbesserte Elektrodenstruktur, insbesondere eine verbesserte Anodenstruktur, aus. Wie bereits ausgeführt, führt das erfindungsgemäße Verfahren zu Metallpartikeln, auf deren Oberfläche das mindestens eine Leitmittel und der mindestens eine Gasungsinhibitor abgeschieden und fixiert sind. Dies führt zu einer verbesserten elektrischen Anbindung der Metallpartikel untereinander, die auch im Zuge elektrochemisch induzierter volumetrischer Veränderungen erhalten bleibt. Dadurch lässt sich die Knopfzelle effizienter entladen. Durch die Anwesenheit des mindestens einen Gasungsinhibitors auf der Oberfläche der Metallpartikel werden Gasungen, insbesondere eine Wasserstoffentwicklung innerhalb der Anode, und damit einhergehende Dekontaktierungen und Volumenänderungen weitgehend vermieden oder zumindest reduziert. Dadurch verbessern sich auch die Sicherheitseigenschaften der Knopfzelle.

Als Zwischenprodukt des erfindungsgemäßen Verfahrens kann eine Anodenmischung auftreten, die als Komponenten die beschriebenen Metallpartikel, den beschriebenen mindestens einen Binder, das beschriebene mindestens ein Leitmittel sowie den beschriebenen mindestens einen Gasungsinhibitor umfasst und sich zur Verwendung in den beschriebenen Knopfzellen eignet.

Bevorzugt besteht die Anodenmischung aus Metallpartikeln, deren Oberfläche mit dem mindestens einen Binder beschichtet ist, wobei in die Schicht aus dem mindestens einen Binder das mindestens eine Leitmittel und der mindestens eine Gasungsinhibitor eingelagert ist.

Besonders bevorzugt besteht die Anodenmischung aus beschichteten Zinkpartikeln.

Die beschichteten Partikel weisen üblicherweise eine mittlere Partikelgröße zwischen 10 µm und 250 auf.

Die Anodenmischung tritt in der Regel als Resultat der Schritte
- Kontaktieren besagter Komponenten in Gegenwart von Wasser,
- Entfernen des Wassers, und
- Zerkleinern von erhaltenen Agglomeraten
auf.

Bevorzugte Ausführungsformen dieser Schritte sind bereits detailliert beschrieben worden. Auf die entsprechenden Ausführungen wird hiermit Bezug genommen bzw. verwiesen.

Die Anodenmischung wird nicht zwingend direkt weiterverarbeitet, vielmehr kann sie auch gelagert und separat vertrieben werden. Zu diesem Zweck kann sie portioniert und abgepackt sein, beispielsweise in Verpackungen aus Kunststoff oder in geeigneten Gebinden.

Weitere Merkmale der Erfindung ergeben sich aus der nachfolgenden Beschreibung von bevorzugten Ausführungsformen in Verbindung mit den Unteransprüchen. Hierbei können die einzelnen Merkmale jeweils für sich oder zu mehreren in Kombination miteinander bei einer Ausführungsform verwirklicht sein. Die beschriebenen besonderen Ausführungsformen dienen lediglich zur Erläuterung und zum besseren Verständnis der Erfindung und sind in keiner Weise einschränkend zu verstehen.

### Beispiele

(1) Zur Herstellung einer Anodenmischung gemäß dem erfindungsgemäßen Verfahren wurde Zinkpulver mit einer mittleren Partikelgröße von etwa 200 µm mit Graphitpulver mit einer mittleren Partikelgröße von ca. 10 µm in einem Wirbelschichtmischer inniglich gemischt. Dabei lagerten sich die Graphitpartikel auf der Oberfläche der Zinkpartikel ab. Anschließend erfolgte die Zugabe einer wässrigen Carbopol®-Lösung in Form eines feinen Sprühnebels. Die Menge und Konzentration der Carbopol®-Lösung war dabei derart abgestimmt, dass, bezogen auf das Gesamtgewicht der entstehenden Anodenmischung (in getrocknetem Zustand), auf dem Zinkpulver ca. 0,2 Gew.-% Carbopol® abgeschieden wurden. Die erhaltenen mit Carbopol® beschichteten Zinkpartikel wurden anschließend getrocknet. Durch einen abschließenden Mahlvorgang wurden entstandene Partikelagglomerate aufgebrochen.
(2) Zur Herstellung einer Anodenmischung gemäß dem erfindungsgemäßen Verfahren wurde eine wässrige Carbopol®-Lösung bereitgestellt, in der Graphitpulver suspendiert wurden. Zinkpulver mit einer mittleren Partikelgröße von etwa 200 wurde in einem Wirbelschichtmischer vorgelegt. Anschließend wurde die Suspension in Form eines feinen Sprühnebels in den Wirbelschichtmischer eingespeist. Die Reaktionsbedingungen wurden dabei so eingestellt, dass, bezogen auf das Gesamtgewicht der entstehenden Anodenmischung (in getrocknetem Zustand), auf dem Zinkpulver ca. 0,2 Gew.-% Graphitpartikel und 0,3 Gew.-% Carbopol® abgeschieden wurden. Die erhaltenen beschichteten Zinkpartikel wurden anschließend getrocknet. Durch einen abschließenden Mahlvorgang wurden entstandene Partikelagglomerate aufgebrochen.
(3) Zur Herstellung von Zink-Luft-Knopfzellen wurde die gemäß (1) und (2) hergestellten pulverförmigen Anodenmischungen jeweils in die Zellendeckel geeigneter Knopfzellengehäuse eingerieselt und mit einem alkalischen Elektrolyten versetzt. Die Zellendeckel wurden mit einer Dichtung sowie anschließend mit einer Luft-Kathode enthaltende Zellenbecher kombiniert. Durch Umbördeln der Schnittkante der Zellenbecher über den Rand der Zellendeckel wurde die Zelle verschlossen.

Die verbesserten Kontakteigenschaften sind dabei insbesondere auf die bereits beschriebene kompositäre Struktur der Partikel zurückzuführen. Nach Zugabe des Elektrolyten beginnt die Binderhülle der Partikel leicht zu quellen, und es bildet sich eine Paste aus, wobei der Binder insbesondere in die sich bildenden Partikelzwischenräume eingelagert wird und so der Anode mechanische Stabilität verleiht. Die teilweise Beschichtung der Metallpartikel mit dem Leitmittel bleibt während diesem Vorgang erhalten und trägt neben den direkten Partikelkontakten untereinander zur Leitfähigkeit der Elektrode bei. Im Falle einer elektrochemisch induzierten Ausdehnung der Metallpartikel wird das Leitmittel reibungsbedingt zu größeren Agglomeraten zusammengeschoben, so dass die Leitstruktur grundsätzlich erhalten bleibt.

## Patentansprüche

1. Verfahren zur Herstellung einer Knopfzelle mit einer Metallpartikel umfassenden Anode, wobei das Verfahren die Schritte
- Bereitstellung einer Anodenmischung , umfassend als Komponenten die Metallpartikel, mindestens einen Binder und mindestens ein Leitmittel sowie einen Gasungsinhibitor,
- Bereitstellung eines Knopfzellengehäuses,
- Einbringen der Mischung in das Knopfzellengehäuse,
- Versetzen der Mischung mit einem Elektrolyten und
- flüssigkeitsdichtes Schließen des Gehäuses,
aufweist, **dadurch gekennzeichnet, dass** die Komponenten der Mischung vor dem Einbringen in das Gehäuse in Gegenwart von Wasser kontaktiert werden, das Wasser nach der Kontaktierung mittels Trocknen mindestens teilweise wieder entfernt wird und bei einem sich an die Kontaktierung anschließenden Zerkleinerungsschritt beim Kontaktieren gegebenenfalls gebildete Agglomerate aufgebrochen werden.

2. Verfahren nach Anspruch 1, **dadurch gekennzeichnet, dass** zur Kontaktierung
- die Komponenten miteinander gemischt werden und das Wasser der Mischung aus den drei Komponenten zugesetzt wird
und/oder
- der Binder mit dem Wasser versetzt oder in dem Wasser gelöst wird und der Versatz oder die Lösung den Metallpartikeln und dem Leitmittel zugesetzt werden
und/oder
- der Binder und das Leitmittel mit dem Wasser versetzt und/oder in dem Wasser gelöst werden und der Versatz und/oder die Lösung auf die Oberfläche der Metallpartikel aufgebracht wird.

3. Verfahren nach Anspruch 1 oder Anspruch 2, **dadurch gekennzeichnet, dass** sich an die Kontaktierung ein Mahlvorgang anschließt.

4. Verfahren nach einem der vorhergehenden Ansprüche, **dadurch gekennzeichnet, dass** es sich bei den Metallpartikeln um Partikel aus Zink, Eisen, Cadmium, Kupfer, Aluminium oder Legierungen der genannten Metalle handelt.

5. Verfahren nach einem der vorhergehenden Ansprüche, **dadurch gekennzeichnet, dass** das Leitmittel ausgewählt ist aus der Gruppe mit Graphit, Aktivkohle, Kohlenstoff-Nanoröhrchen, Ruß und Mischungen davon.

6. Verfahren nach einem der vorhergehenden Ansprüche, **dadurch gekennzeichnet, dass** der Binder ein in Wasser prozessierbarer Binder ist.

7. Verfahren nach einem der vorhergehenden Ansprüche, **dadurch gekennzeichnet, dass** es sich bei dem Gasungsinhibitor um eine oberflächenaktive Substanz handelt.

8. Verfahren nach einem der vorhergehenden Ansprüche, **dadurch gekennzeichnet, dass** die Mischung
- zwischen 0,05 und 5 Gew.-% des Leitmittels
und/oder
- zwischen 0,05 und 5 Gew.-% des Binders
und/oder
- zwischen 0,05 und 1 Gew.-% des Gasungsinhibitors enthält, bezogen auf Gesamtgewicht der Mischung in trockenem Zustand.

9. Verfahren nach einem der vorhergehenden Ansprüche, **dadurch gekennzeichnet, dass** die Kontaktierung der Mischung in einer Wirbelschichtanlage erfolgt.

## Claims

1. Process for producing a button cell having an anode comprising metal particles, wherein the process comprises the steps of
- providing an anode mixture comprising, as components, the metal particles, at least one binder and at least one conductor, and a gassing inhibitor,
- providing a button cell housing,
- introducing the mixture into the button cell housing,
- adding an electrolyte to the mixture and
- sealing the housing in a liquid-tight manner,
**characterized in that** the components of the mixture, before being introduced into the housing, are contacted with water, the water is at least partly removed again by means of drying after the contacting, and any agglomerates formed in the contacting are broken up in a comminution step that follows the contacting.

2. Process according to Claim 1, **characterized in that**, for contacting
- the components are mixed with one another and the water is added to the mixture of the three components
and/or
- the binder is admixed with the water or dissolved in the water and the admixture or solution is added to the metal particles and the conductor
and/or
- the binder and the conductor are admixed with the water and/or dissolved in the water and the admixture and/or solution is applied to the surface of the metal particles.

3. Process according to Claim 1 or Claim 2, **characterized in that** the contacting is followed by a grinding operation.

4. Process according to any of the preceding claims, **characterized in that** the metal particles are particles of zinc, iron, cadmium, copper, aluminium or alloys of the metals mentioned.

5. Process according to any of the preceding claims, **characterized in that** the conductor is selected from the group comprising graphite, activated carbon, carbon nanotubes, carbon black and mixtures thereof.

6. Process according to any of the preceding claims, **characterized in that** the binder is a binder processible in water.

7. Process according to any of the preceding claims, **characterized in that** the gassing inhibitor is a surface-active substance.

8. Process according to any of the preceding claims, **characterized in that** the mixture contains
- between 0.05% and 5% by weight of the conductor and/or
- between 0.05% and 5% by weight of the binder and/or
- between 0.05% and 1% by weight of the gassing inhibitor,
based on the total weight of the mixture in the dry state.

9. Process according to any of the preceding claims, **characterized in that** the contacting of the mixture is effected in a fluidized bed system.

## Revendications

1. Procédé de fabrication d'une pile bouton comprenant une anode comprenant des particules métalliques, le procédé comprenant les étapes suivantes :
- la préparation d'un mélange d'anode, comprenant en tant que composants les particules métalliques, au moins un liant et au moins un conducteur, ainsi qu'un inhibiteur de dégagement gazeux,
- la préparation d'un boîtier de pile bouton,
- l'introduction du mélange dans le boîtier de pile bouton,
- le mélange du mélange avec un électrolyte et
- la fermeture étanche aux liquides du boîtier,
**caractérisé en ce que** les composants du mélange sont mis en contact en présence d'eau avant l'introduction dans le boîtier, l'eau étant au moins partiellement éliminée par séchage après la mise en contact et les agglomérats éventuellement formés lors de la mise en contact étant fragmentés lors d'une étape de broyage ultérieure à la mise en contact.

2. Procédé selon la revendication 1, **caractérisé en ce que**, pour la mise en contact,
- les composants sont mélangés les uns avec les autres et l'eau est ajoutée au mélange des trois composants,
et/ou
- le liant est mélangé avec l'eau ou dissous dans l'eau, et les particules métalliques et le conducteur sont ajoutés au mélange ou à la solution,
et/ou
- le liant et le conducteur sont mélangés avec l'eau et/ou dissous dans l'eau, et le mélange et/ou la solution est appliqué sur la surface des particules métalliques.

3. Procédé selon la revendication 1 ou la revendication 2, **caractérisé en ce que** la mise en contact est suivie par un processus de broyage.

4. Procédé selon l'une quelconque des revendications précédentes, **caractérisé en ce que** les particules métalliques sont des particules de zinc, de fer, de cadmium, de cuivre, d'aluminium ou d'alliages des métaux mentionnés.

5. Procédé selon l'une quelconque des revendications précédentes, **caractérisé en ce que** le conducteur est choisi dans le groupe constitué par le graphite, le charbon actif, les nanotubes de carbone, le noir de carbone et les mélanges de ceux-ci.

6. Procédé selon l'une quelconque des revendications précédentes, **caractérisé en ce que** le liant est un liant pouvant être traité dans l'eau.

7. Procédé selon l'une quelconque des revendications précédentes, **caractérisé en ce que** l'inhibiteur de dégagement gazeux est une substance tensioactive.

8. Procédé selon l'une quelconque des revendications précédentes, **caractérisé en ce que** le mélange contient
- entre 0,05 et 5 % en poids du conducteur
et/ou
- entre 0,05 et 5 % en poids du liant
et/ou
- entre 0,05 et 1 % en poids de l'inhibiteur de dégagement gazeux,
par rapport au poids total du mélange à l'état sec.

9. Procédé selon l'une quelconque des revendications précédentes, **caractérisé en ce que** la mise en contact du mélange a lieu dans une installation à lit fluidisé.
